# EUROPEAN PATENT APPLICATION

(11) **EP 1 632 157 A1**
(43) Date of publication of application: **08.03.2006**
(21) Application number: 03817237.5
(22) Date of filing: 21.08.2003
(51) Int. Cl.: A47G 19/14, A47G 19/16, A47J 31/24

(54) **A JUG, AN ELECTROTHERMAL JUG AND AN ELECTROTHERMAL JUG WITHOUT WIRE FOR COOKING BEVERAGE**

(30) Priority: 12.06.2003 CN 03126835
(71) Applicant: Shao, Zhicheng, Shunde, Guangdong 528314 (CN)
(72) Inventor: Shao, Zhicheng, Shunde, Guangdong 528314 (CN)
(74) Representative: Stuttard, Garry Philip
(86) International application number: PCT/CN2003/000705
(87) International publication number: WO 2004/110225

(57) **Abstract**

The invention relates to a jug, particularly to a jug, an electrothermal jug and an electrothermal jug without wire for cooking beverage. The jug for cooking beverage includes a body, an inner container on the inner bottom of the body. A funnel is provided on the up-port of the inner container. A filtrating up-layer and a filtrating down-layer are arranged in the funnel. The electrothermal jug for cooking beverage is formed by adding an electric heater to the bottom of the body. The electrothermal jug without wire for cooking beverage is formed by adding a jug-seat to the jug and providing a plug and a jack for electrically connecting on the body and jug-seat respectively. The inner container is heated so that the water in the inner container is boiling away, rolling upwards, and scouring coffee powder or tealeaf in the funnel, thereby forming tea or coffee, so the residue of tealeaf or coffee powder is separated from the tea or coffee. The beverage is drunk expediently and spicy, the user of the jug is scalded diseasily.

## Description

### Background of the Invention

### Field of the Invention

The present invention relates to the technical field of jug, and particularly to a jug, an electrothermal jug and an electrothermal jug without wire with a body for cooking beverage.

### Description of the Prior Art

The existing jug includes a body, which is put on a stove when boiling water, and the water is boiled in the body. As making coffee or tea, if the coffee powder is in the body for cooking beverage, when the beverage is poured out, the coffee powder will be poured out through the spout with the beverage in the jug, and particularly when the water in the jug is in a sloshing state, the coffee powder will be mixed in the beverage and is more likely to be poured out with the coffee beverage. If tealeaf is placed in the body, because the tealeaf will be swollen to be a leaf with a large area after being soaked by hot water, when pouring out the tea, the swollen tealeaf is easy to block the spout, making the tea in the body unable to be poured out. If the coffee powder and tealeaf are soaked in the hot water for a long time, the taste of coffee or tea beverage produced will become strong, and the beverage with too strong taste is not good for drinking. However, if the beverage made by coffee powder and tealeaf in the body is poured into a cup, it will become cool soon in the cup, which decreases the flavor of coffee or tea beverage in high temperature condition.

However, as for an electrothermal jug including a body and an electric heater disposed on the body, if the water is mixed with the coffee powder or tealeaf and then cooked in the body by energizing and heating the jug, the temperature of the external wall of the body will raise up as the heating time flows, which causes the temperature of the external wall of the body being more than 100°C. Once touching the external wall of the body, the user is likely to be scalded. If the external wall of the body is made of plastic, the external wall of the body is easy to be aging and damaged while staying in high temperature condition. If the external wall of the body is made of metal, it is difficult to make various shapes because of the complex process for machining and molding the metal.

### Summary of the Invention

The object of the invention is to provide a jug, an electrothermal jug and an electrothermal jug without wire for cooking beverage, which brews beverage automatically when the water in the body is of high temperature, and is easy for use.

To achieve the object of the invention, said jug for cooking beverage includes a body, an inner container on the inner bottom of the body. A funnel is provided on the up-port of the inner container. A filtrating up-layer and a filtrating down-layer are arranged in the funnel.

To achieve the object of the invention, said electrothemal jug for cooking beverage includes a body, an electric heater on the body, and an electric connector on the body. An inner container is provided on the bottom of the body. A funnel is provided on the up-port of the inner container. A filtrating down-layer is arranged in the funnel and a filtrating up-layer is arranged in the up-port.

To achieve the object of the invention, said elctrothermal jug without wire for cooking beverage includes a body, an electric heater on the body, a jug-seat for holding the body, a plug and a jack for electrically connecting on the body and jug-seat. An inner container is provided on the inner bottom of the body. A funnel is provided on the up-port of the inner container. A filtrating down-layer is arranged in the funnel and a filtrating up-layer is arranged in the up-port.

Because an inner container is provided on the inner bottom of the body, when water is put in the inner container and the inner container is heated, the water in the inner container is boilingand overflowing from the up-port. When a funnel is provided on the up-port of the said inner container, the boiling water will enter from the down-port of the funnel and come out from the up-port of the funnel. The coffee powder or tealeaf is placed between the filtrating down-layer and the filtrating up-layer of the funnel, and thereby the boiling water can wash the coffee powder of tealeaf in the funnel upwardly, thus forming an auto-brewing. The tea or coffee beverage brewed is between the inner container and the wall of the body, while the coffee powder or tealeaf is sandwiched between the filtrating down-layer and the filtrating up-layer, so the residue of tealeaf or coffee powder is separated from the tea or coffee beverage, which is convenient for drinking. The high temperature inside the body is conducted outward continuously, so the tea or coffee beverage can be kept at high temperature for a long time, which ensures the flavor of the beverage. As long as the bottom of the inner container is heated by the heating source, the temperature of the external surface of the body is low because it is separated from the heating source, thus preventing the user from scalding.

### Brief description of the drawings

FIG.1 is a schematic structural view of the jug for cooking beverage of the invention;
FIG.2 is a schematic structural view of the electrothermal jug for cooking beverage of the invention;
FIG.3 is a schematic structural view of the jug without wire for cooking beverage of the invention;
FIG.4 is a structural view of the bottom;
FIG.5 is a bottom view of FIG.4;
FIG.6 is a schematic structural view of a dry frying thermostat;
FIG.7 is a schematic structural view of an over temperature thermostat;
FIG.8 is a schematic structural view of a heat preservation thermostat;
FIG.9 is a schematic structural view of the plug for electrically connection;
FIG.10 is a stereoscopic structural view of FIG.9;
FIG.11 is a stereoscopic structural view of FIG.10 with the sheet metal on the top removed; and
FIG. 12 is an inner stereoscopic structural view of FIG.10 with the plastic housing removed.

### Detailed Description

The embodiments of the present invention will be further described hereinafter with reference to the accompanying drawing.

As shown in the figures, the jug, the electrothermal jug and the electrothermal jug without wire for cooking beverage include a body 1, an electrical heater 2, a jug-seat 3, a plug for electrical connection 4, a jack 5, an inner container 6, a funnel 7, a filtrating down-layer 8, a filtrating up-layer 9, a bottom 10, a dry frying thermostat 11, a heat preservation thermostat 12, a cover 24, an auxiliary electric heater 25, and an over temperature thermostat 28.

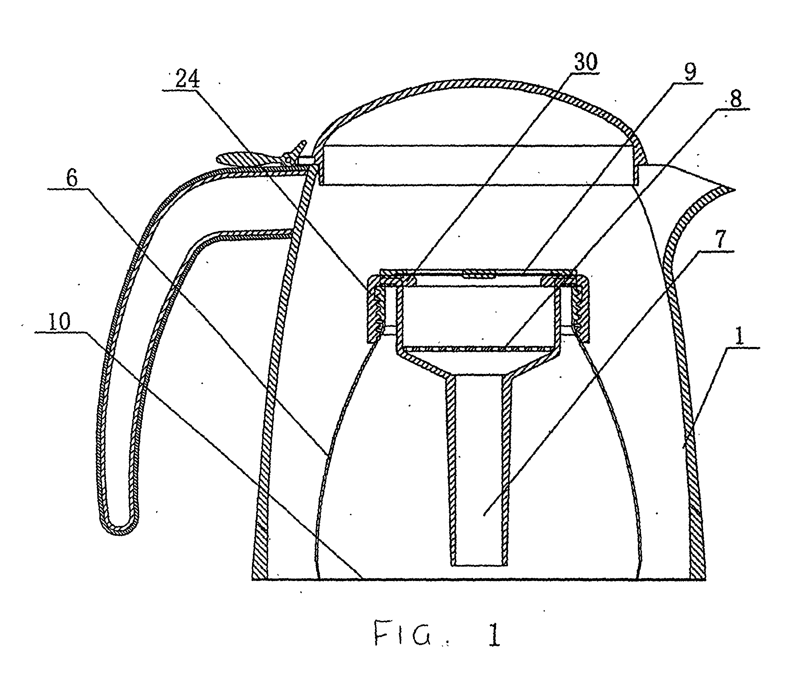

The jug for cooking beverage is shown in FIG.1. The filtrating up-layer 9 is disposed on the overlay of the cover 24 covered on the up-port of the inner container 6. A seal ring 30 is disposed between the overlay and the port of the funnel 7. The filtrating down-layer 8 and the filtrating up-layer 9 are wire nettings. While using, water is put into the inner container 6, and the coffee powder or tealeaf is between the filtrating down-layer 8 and the filtrating up-layer 9 and then the jug is put on the fire. The fire bums the bottom of the inner container 6 centralizedly, and the beverage is produced between the sidewalls of the body 1 and the outside of the inner container 6.

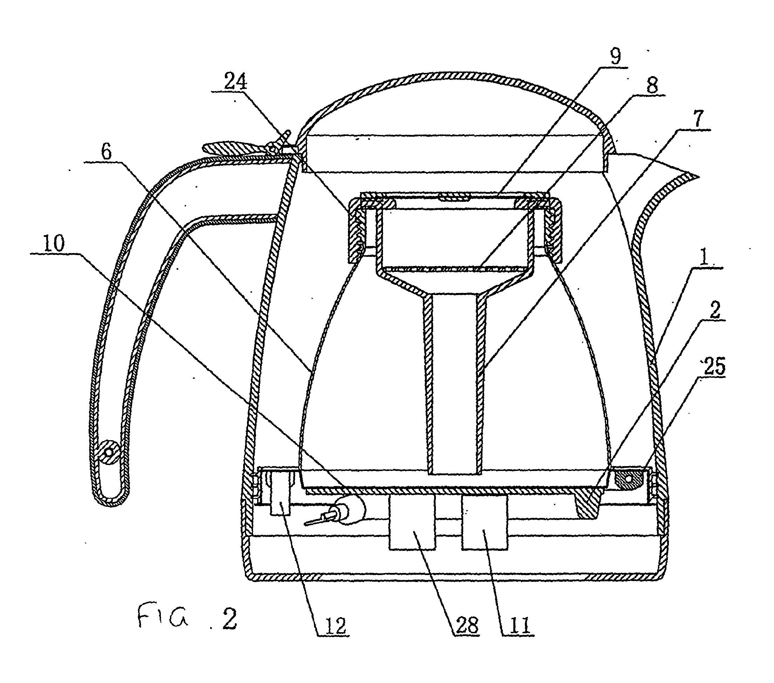

The electrothermal jug for cooking beverage is shown in FIG.2. The electric heater 2 is disposed on the inner bottom 26 of the inner container 6.

An auxiliary electric heater 25 is provided on the outer bottom 27 between the body 1 and the inner container 6.

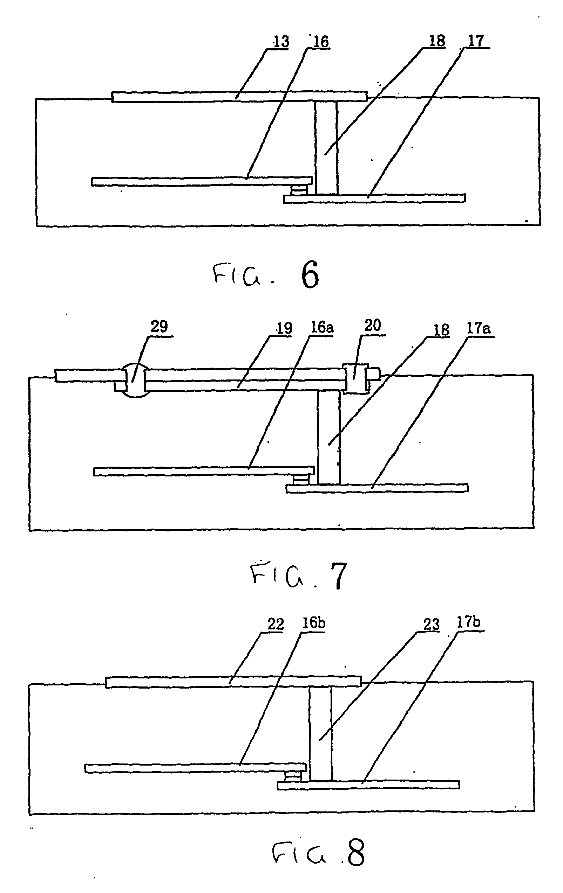

A dry frying thermostat 11 is disposed on the inner bottom 26. As shown in FIG.6, the dry frying thermostat 11 is provided with a dry frying temperature sensitive bimetallic strip 13 attached to the bottom 10, a fixed contact plate 16 and a movable contact plate 17 connected in series in the circuit of the electric heater 2, and a dry frying crown bar 18 is disposed between the movable contact plate 17 and the dry frying temperature sensitive bimetallic strip 13.

An over temperature thermostat 28 is disposed on the inner bottom 26. As shown in FIG.7, said over temperature thermostat 28 is provided with a spring plate 19 riveted onto the top sheet metal 18. A rivet 20 with low-temperature-melting-point riveted onto the sheet metal 18, a fixed contact plate 16a and a movable contact plate 17a connected in series in the circuit of the electric heater 2 are disposed on the tilting arm of the spring plate 19. A fuse crown bar 21 disposed between the movable contact plate 17a and the tilting arm of the spring plate 19.

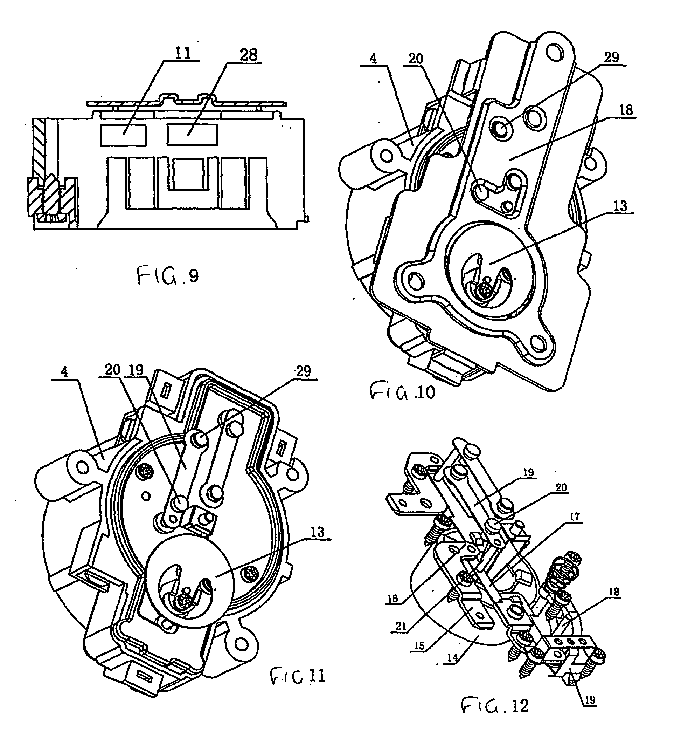

A heat preservation thermostat 12 is disposed on the outer bottom 27. As shown in FIG.8, the heat preservation thermostat 12 is provided with a heat preservation temperature sensitive bimetallic strip 22 attached to the bottom 10, a fixed contact plate 16b and a movable contact plate 17b connected in series in the circuit of the electric heater 2. A heat preservation crown bar 23 is disposed between the movable contact plate 17b and the heat preservation temperature sensitive bimetallic strip 22.

The filtrating up-layer 9 is disposed on the overlay of the cover 24 covered on the up-port of the inner container 6.

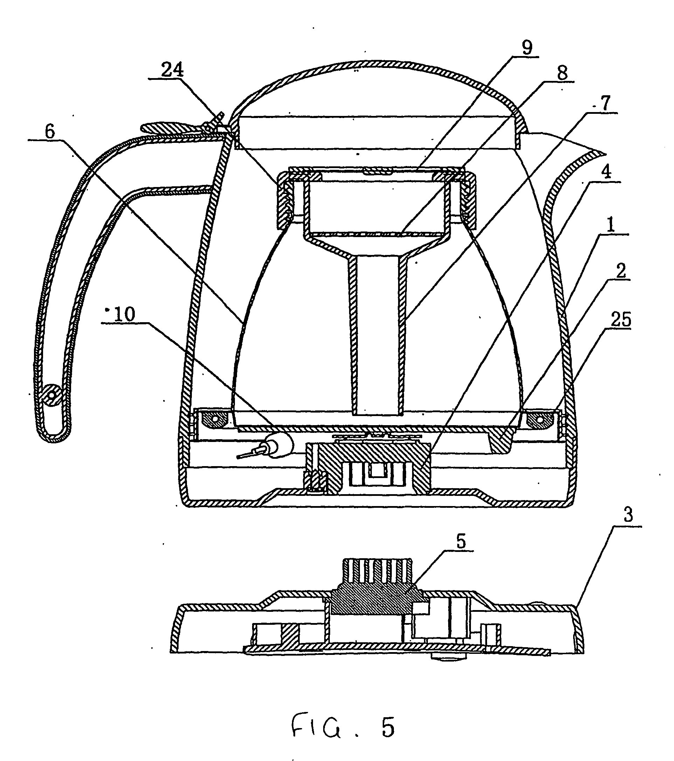

As shown in FIGs.4 and 5, the inner bottom 26 extends downwardly to form an annular step-like shape with the outer bottom 27. The heat energy generated by the electric heater 2 may be conducted into the inner container 6 centralizedly. Because a wall of the bottom of the inner container 6 exists between the inner bottom 26 and the outer bottom 27, the inner container 6 is easy to be soldered onto the bottom 10, and thus the heat generated while soldering the inner container 6 and the bottom 10 will not be conducted to the bottom 10 directly, thereby preventing the electric heater 2 that has been soldered onto the bottom 10 from coming off due to the excessive heat energy generated in the soldering process of the inner container 6 and the bottom 10.

While using, water is put into the inner container 6, and the coffee powder or tealeaf is put between the filtrating down-layer 8 and the filtrating up-layer 9, and then the electric heater 2 is energized to heat. The temperature centralizes and rises at the bottom of the inner container 6, and the beverage is generated between the sidewall of the body 1 and the outside of the inner container 6. When the water in the inner container 6 is boiled away, the temperature of the bottom of the inner container 6 is continues to rise over 100°C. Then, the dry frying thermostat 11 acts to cut off power supply upon dry frying, and the electric heater 2 is powered off to stop heating. After water is input into the inner container 6 again, the dry drying thermostat 11 is reset, and the electric heater 2 is energized to heated for cooking beverage again. In the case that the dry frying thermostat 11 is failure, the temperature at the bottom of the inner container 6 still continues to rise until the over temperature thermostat 28 acts to cut off the power supply completely, which protects the electrothermal jug for cooking beverage from being burned out. When the beverage generated during cooking accumulates between the inner wall of the body 1 and the outer wall of the inner container 6, because the water in the inner container 6 is boiled away, the dry frying thermostat 11 cut off the power supply of the electric heater 2 and causes it to stop heating. When the temperature of the beverage decreases to the set temperature, the heat preservation thermostat 12 acts to energize the auxiliary electric heater 25 and enable it to heat, and after the beverage temperature rises to the set temperature, the electric heater is powered off and stops heating again, which ensures the beverage is kept at high temperature and for the drinker to feel the flavor.

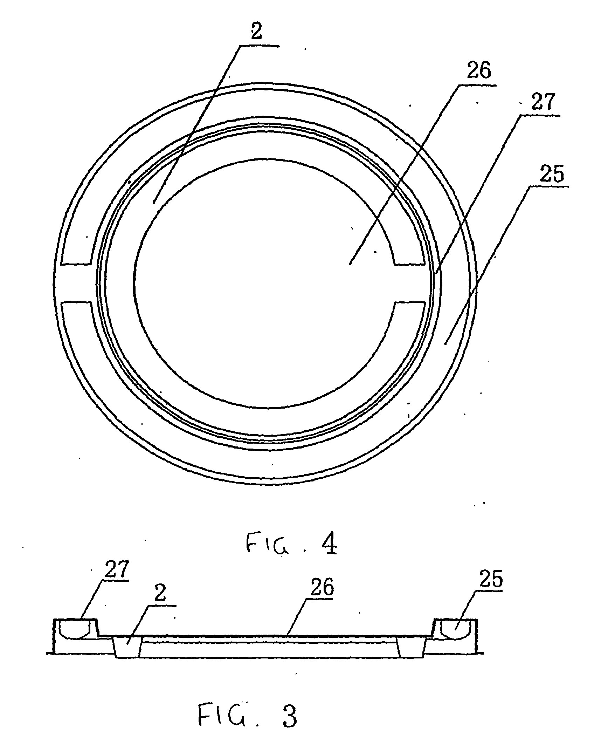

The electrothermal jug without wire for cooking beverage is shown in FIG.3. The electric heater 2 is disposed at the bottom of the inner container 6.

An auxiliary electric heater 25 is disposed on the bottom 10 between the body 1 and the inner container 6. A dry frying thermostat 11 that senses the bottom of the inner container 6 is disposed on the plug 4 for electric connection. An over temperature thermostat 28 that senses the bottom of the inner container 6 is disposed on the plug 4 for electric connection. A heat preservation thermostat 12 is disposed on the outer bottom 27. The structure of the dry frying thermostat 11 is the same as that described above. The structure of the over temperature thermostat 28 is the same as that described above. The structure of the heat preservation thermostat 12 is the same as that described above.

The filtrating up-layer 9 is disposed on the overlay of the cover 24 covered on the up-port of the inner container 6.

As shown in FIGs.9, 10, 11, 12, the dry frying thermostat 11 and the over temperature thermostat 28 are disposed in the plug for electric connection 4, in which a dry frying temperature sensitive bimetallic strip 13 is attached onto the bottom 10, and a fixed contact plate 16 and a movable contact plate 17 connected to the contact plate 14 for electric connection and electrode 15 are provided in the plug 4 for electric connection, and a dry frying crown bar 18 is disposed between the movable contact plate 17 and the dry frying temperature sensitive bimetallic strip 13. A spring plate 19 riveted onto the sheet metal 18 at the top of the plug 4 for electric connection is disposed on the over temperature thermostat 28. A rivet 20 with low-temperature-melting-point riveted onto the sheet metal 18 is provided on the tilting arm of the spring plate 19. A fixed contact plate 16 and a movable contact plate 17 connected to the contact plate 14 for electric connection and electrode 15 are provided in the plug 4 for electric connection. A fuse crown bar 21 is disposed between the movable contact plate 17 and the tilting arm of the spring plate 19.

A heat preservation thermostat 12 is provided on the outer bottom 27. The inner bottom 26 extends downwardly to form a step-like shape with the outer bottom 27.

Because a jug-seat 3 is disposed below the body 1, the plug 4 and jack 5 for electric connection on the body 1 and the jug-seat 3 differs from that of the electrothermal jug for cooking beverage, and the difference lies in that the electric power line is set on the jug-seat 3, the power is conducted to the electric heater 2 at the bottom of the body 1 and the auxiliary electric heater 25 through the plug 4 and jack 5 for electric connection, which causes the jug easy for use because there is no power line on the body 1 when pouring out beverage. The dry frying thermostat 11 and the over temperature thermostat 28 are disposed in the plug 4 for electric connection, so the structure is compact and it is easy to assemble.

## Claims

1. A jug for cooking beverage, comprising a body (1), wherein an inner container (6) is disposed on the bottom (10) of the body (1); a funnel (7) is provided on an up-port of the inner container (6); and a filtrating up-layer (9) and a filtrating down-layer (8) are arranged in the funnel (7).

2. A jug for cooking beverage according to Claim 1, wherein the said filtrating up-layer (9) is disposed on the overlay of the cover (24) covered on the up-port of the inner container (6).

3. A jug for cooking beverage according to Claim 1, wherein the filtrating down-layer (8) and the filtrating up-layer (9) are wire nettings.

4. An elctrothermal jug for cooking beverage, comprising a body (1), an electric heater (2) on the body (1), wherein an inner container (6) is provided on the bottom (10) of the body (1); a funnel (7) is provided on the up-port of the inner container (6); a filtrating down-layer (8) is arranged in the funnel (7); and a filtrating up-layer (9) is arranged on the up-port.

5. An electrothermal jug for cooking beverage according to Claim 4, wherein the electric heater (2) is disposed on the inner bottom (26) of the inner container (6).

6. An electrothermal jug for cooking beverage according to Claim 5, wherein an auxiliary electric heater (25) is provided on the outer bottom (27) between the body (1) and the inner container (6).

7. An electrothermal jug for cooking beverage according to Claim 4, 5 or 6, wherein a dry frying thermostat (11) is disposed on the inner bottom (26).

8. An electrothermal jug for cooking beverage according to Claim 7, wherein the dry frying thermostat (11) is provided with a dry frying temperature sensitive bimetallic strip (13) attached to the bottom (10), a fixed contact plate (16) and a movable contact plate (17) connected in series in the circuit of the electric heater (2), a dry frying crown bar (18) disposed between the movable contact plate (17) and the dry frying temperature sensitive bimetallic strip (13).

9. An electrothermal jug for cooking beverage according to Claim 7, wherein an over temperature thermostat (28) is disposed on the inner bottom (26).

10. An electrothermal jug for cooking beverage according to Claim 9, wherein the over temperature thermostat (28) is provided with a spring plate (19) riveted onto the top sheet metal (18); a rivet (20) with low-temperature-melting-point riveted onto the sheet metal (18), a fixed contact plate (16) and a movable contact plate (17) connected in series in the circuit of the electric heater (2) are disposed on the tilting arm of the spring plate (19); a fuse crown bar (21) is disposed between the movable contact plate (17) and the tilting arm of the spring plate (19).

11. An electrothermal jug for cooking beverage according to Claim 7, wherein a heat preservation thermostat (12) is disposed on the outer bottom (27).

12. An electrothermal jug for cooking beverage according to Claim 11, wherein the heat preservation thermostat (12) is provided with a heat preservation temperature sensitive bimetallic strip (22) attached to the bottom (10), a fixed contact plate (16a) and a movable contact plate (17a) connected in series in the circuit of the electric heater (2); a heat preservation crown bar (23) is disposed between the movable contact plate (17a) and the heat preservation temperature sensitive bimetallic strip (22).

13. An electrothermal jug for cooking beverage according to Claim 4, 5 or 6, wherein the said filtrating up-layer (9) is disposed on the overlay of the cover (24) covered on the up-port of the inner container (6).

14. An electrothermal jug for cooking beverage according to Claims 4, 5 or 6, wherein the inner bottom (26) extends downwardly to form a step-like shape with the outer bottom (27).

15. An electrothermal jug without wire for cooking beverage, comprising a body (1), an electric heater (2) on the body (1), a jug-seat (3) for carrying the body (1), a plug (4) and a jack (5) for electrically connecting on the body (1) and jug-seat (3); wherein an inner container (6) is provided on the inner bottom (10) of the body (1); a funnel (7) is provided on the up-port of the inner container (6); a filtrating down-layer (8) is arranged in the funnel (7); and a filtrating up-layer (9) is arranged in the up-port.

16. An electrothermal jug without wire for cooking beverage according to Claim 15, wherein the electric heater (2) is disposed on the inner bottom (26) of the inner container (6).

17. An electrothermal jug without wire for cooking beverage according to Claim 16, wherein an auxiliary electric heater (25) is provided on the outer bottom (27) between the body (1) and the inner container (6).

18. An electrothermal jug without wire for cooking beverage according to Claim 16, wherein a dry frying thermostat (11) that senses the bottom of the inner container (6) is disposed on the plug (4) for electric connection.

19. An electrothermal jug without wire for cooking beverage according to Claim 18, wherein the dry frying thermostat (11)is provided with a dry frying temperature sensitive bimetallic strip (13) attached to the bottom (10), a fixed contact plate (16) and a movable contact plate (17) connected in series in the circuit of the electric heater (2) and a dry frying crown bar (18) is disposed between the movable contact plate (17) and the dry frying temperature sensitive bimetallic strip (13).

20. An electrothermal jug without wire for cooking beverage according to Claim 18 or 19, wherein an over temperature thermostat (28) that senses the bottom of the inner container (6) is disposed on the plug (4) for electric connection.

21. An electrothermal jug without wire for cooking beverage according to Claim 20, wherein the over temperature thermostat (28) is provided with a spring plate (19) riveted onto the top sheet metal (18) of the plug (4) for electric connection ; a rivet (20) with low-temperature-melting-point riveted onto the sheet metal (18) is disposed on the tilting arm of the spring plate (19); a fixed contact plate (16) and a movable contact plate (17) connected to the contact plate 14 for electric connection and electrode 15 are provided in the plug 4 for electric connection ; and a fuse crown bar (21) is disposed between the movable contact plate (17) and the tilting arm of the spring plate (19).

22. An electrothermal jug without wire for cooking beverage according to Claim 17, 18 or 19, wherein a heat preservation thermostat (12) is disposed on the outer bottom (27).

23. An electrothermal jug without wire for cooking beverage according to Claim 22, wherein the heat preservation thermostat (12) is provided with a heat preservation temperature sensitive bimetallic strip (22) attached to the bottom (10); a fixed contact plate (16) and a movable contact plate (17) connected to the contact plate 14 for electric connection and electrode 15 are provided in the plug 4 for electric connection; and a heat preservation crown bar (23) is disposed between the movable contact plate (17) and the heat preservation temperature sensitive bimetallic strip (22).

24. An electrothermal jug without wire for cooking beverage according to Claim 15, 16, 17, 18 or 19, wherein the filtrating up-layer (9) is disposed on the overlay of the cover (24) covered on the up-port of the inner container (6).

25. An electrothermal jug without wire for cooking beverage according to Claim 15, 16, 17, 18 or 19, wherein the inner bottom (26) extends downwardly to form a step-like shape with the outer bottom (27).
